# EUROPEAN PATENT SPECIFICATION

(11) **EP 3 138 244 B1**
(45) Date of publication and mention of the grant of the patent: **14.10.2020**
(21) Application number: 14890802.3
(22) Date of filing: 28.04.2014
(51) Int. Cl.: H04W 4/00, H04L 12/28, H04W 88/04, H04B 11/00, H04L 29/06, H04W 12/06, H04W 12/08, H04W 48/14, H04W 48/20

(54) **CONNECTING ONE ELECTRONIC DEVICE TO INTERNET THROUGH ANOTHER ELECTRONIC DEVICE**
VERBINDEN EINER ELEKTRONISCHEN VORRICHTUNG MIT DEM INTERNET ÜBER EINE ANDERE ELEKTRONISCHE VORRICHTUNG
CONNEXION D'UN DISPOSITIF ÉLECTRONIQUE À INTERNET PAR L'INTERMÉDIAIRE D'UN AUTRE DISPOSITIF ÉLECTRONIQUE

(43) Date of publication of application: 08.03.2017
(73) Proprietor: Harman International Industries, Incorporated, Stamford, Connecticut 06901 (US)
(72) Inventor: WANG, Junhao, Shanghai 200233 (CN); ZHANG, Qingshan, Shanghai 200233 (CN); YANG, Zeng, Shanghai 200233 (CN)
(74) Representative: Grünecker Patent- und Rechtsanwälte PartG mbB
(86) International application number: PCT/CN2014/076354
(87) International publication number: WO 2015/165001

(56) References cited:
- WO-A1-2011/053357
- CN-A- 103 260 214
- US-A1- 2005 197 154
- US-A1- 2008 056 216
- US-A1- 2009 049 519
- US-A1- 2010 267 368
- US-A1- 2012 045 994
- US-A1- 2012 324 067
- US-A1- 2013 137 415
- US-A1- 2014 047 143

## Description

### TECHNICAL FIELD

The present disclosure generally relates to connecting one electronic device to internet through another electronic device.

### BACKGROUND

Nowadays, many mobile devices, such as smart phones etc., can be configured as an access point, and other devices can connect to internet through such access point. Usually, to connect a first electronic device to internet through a second electronic device, the second electronic device shall be configured as an access point and a password for accessing the second electronic device shall be set, then the user shall manually select the second electronic device and input the password on the first electronic device. The whole process is very inconvenient. Therefore, there is need for more convenient method.

Document US 2010/267368 A1 discloses a system comprising a hand-held device acting as a gateway for a tethering machine to a desired network (Internet). Document US 2012/045994 A1 discloses a method for establishing communication between two Bluetooth devices. Document US 2013/137415 A1 discloses a system comprising a mobile device communicating with the Internet and a vehicle on-board unit that are linked together such that a display section of the on-board unit serves as a external monitor for the mobile device.

### SUMMARY

The objectives of the present invention are achieved through the subject-matter of the independent claims 1, 7 and 11, respectively claiming a method for connecting a first electronic device to Internet through a second electronic device, a first electronic device and a system, comprising the first electronic device and the second electronic device. Preferred embodiments are set out in the dependent claims.

### BRIEF DESCRIPTION OF THE DRAWINGS

The foregoing and other features of the present disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings.
FIG. 1 is a flow chart of a method 100 for connecting a first electronic device to internet through a second electronic device according to one embodiment;
FIG. 2 is a schematic diagram of a wireless network environment;
FIG. 3 is a schematic block diagram of a first electronic device 300 according to one embodiment; and
FIG. 4 is a schematic block diagram of a second electronic device 400 according to one embodiment.

### DETAILED DESCRIPTION

To connect a first electronic device to internet through another electronic device, the another electronic device needs to configure itself as an Access Point (AP) and the first electronic device needs to search the AP and request to connect with the AP.

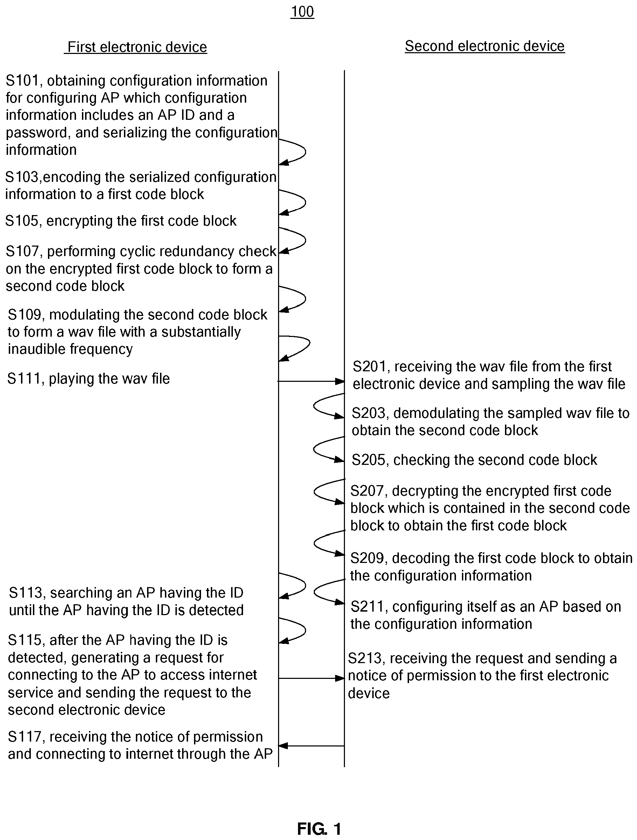

FIG. 1 is a flow chart of a method 100 for connecting a first electronic device to internet through a second electronic device according to one embodiment. In the embodiment, connection between the first and second electronic devices is Wi-Fi connection. In other embodiments, the connection between the first and second electronic devices may be Bluetooth (BT) connection.

Referring to FIG. 1, in S101, a first electronic device obtaining configuration information for configuring AP which configuration information includes an AP identifier (ID) and a password, and serializing the configuration information.

The first electronic device may be a vehicle-mounted device, such as a head unit, or mobile devices. In some embodiments, serializing the configuration information may include concatenating the configuration information into a string.

In S103, the first electronic device encoding the serialized configuration information to a first code block.

In some embodiments, the serialized configuration information may be encoded according to American Standard Code for Information Interchange (ASCII) table to form a first code block.

In S105, the first electronic device encrypting the first code block.

In some embodiments, the first code block may be encrypted by a reversible encryption algorithm, such as symmetric-key algorithm including Data Encryption Algorithm (DEA) algorithm, Triple Data Encryption Algorithm (TDEA) algorithm and RC5 algorithm. Besides, a keyt may be used in the encryption process. In some embodiments, S105 may not be performed.

In S107, the first electronic device performing Cyclic Redundancy Check (CRC) on the encrypted first code block to form a second code block.

In some embodiments, an error correcting code, which is calculated based on the encrypted first code block in a certain mathematical relation, may be added to the end of the encrypted first code block to form the second code block.

In S109, the first electronic device modulating the second code block to form a wav file with a substantially inaudible frequency.

In some embodiments, the second code block may be encoded by a certain encoding method, such as a repeated encoding method, to form an encoded block. Then, a first modulation process, such as a Phase-Shift-Keying (PSK) modulation method, may be applied to the encoded block to form a set of symbols. A second modulation process, such as Time Division Multiplexing (TDM), Frequency Division Multiplexing (FDM) and Code Division Multiplexing (CDM), may be applied to the set of symbols to form a base band signal. Afterward, a carrier wave may be used to carry the base band signal to form a wave signal. In some embodiments, the carrier wave may have a substantially inaudible frequency, for example, above 16 KHz. In some embodiments, the frequency of the acoustic signal may be above 17 KHz or 19 KHz. In some embodiments, the frequency of the acoustic signal may be above 19 KHz and below 23 KHz. Finally, a wav file with the substantially inaudible frequency, which can be played by a speaker, may be constructed based on the wave signal.

In S111, the first electronic device playing the wav file.

To play the wav file, the first electronic device may have a speaker. In some embodiments, the wav file may be played all the time. In some embodiments, the wav file may be played under control. For example, if it is in a vehicle, the first electronic device may be triggered to play the wav file when it wants to connect to internet through another electronic device which can configure itself as an AP based on the configuration information.

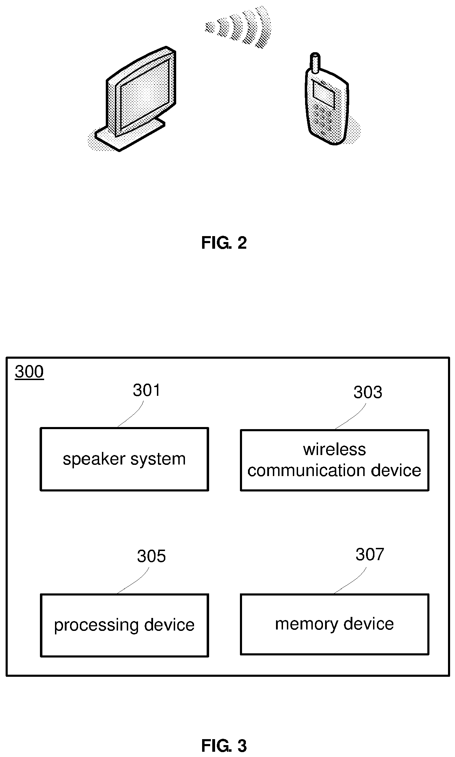

FIG. 2 is a schematic diagram of a wireless network environment. As shown in FIG. 2, the first electronic device broadcasts an acoustic signal which has a substantially inaudible frequency, and the second electronic device with a microphone around may receive the acoustic signal.

In S201, the second electronic device receiving the wav file from the first electronic device and sampling the wav file.

In some embodiments, the second electronic device may be a mobile device which can configure itself as an AP based on the configuration information contained in the received wav file, such as a mobile phone. The second electronic device may have a microphone to receive the wav file.

In some embodiments, the wav file may be recorded and sampled by an Analog-to-Digital (A/D) converter with a sampling frequency of 48 KHz.

In S203, the second electronic device demodulating the sampled wav file to obtain the second code block.

Since noise exists during the reception of the wav file, in some embodiments, the wav file may be put into a high pass filter in the second electronic device so that only a high frequency portion thereof remains.

Afterwards, a first and second demodulation processes, which respectively correspond to the second and first modulation processes in S109, may be employed to demodulate the wav file to obtain the encoded block. And the encoded block may be decoded by a decoding method corresponding to the certain encoding method in S109 to obtain the second code block.

In S205, the second electronic device checking the second code block.

Since the second code block contains the encrypted first code block and the error correcting code, the second electronic device may determine whether the encrypted first code block is a correct code block. Specifically, the second electronic device may check whether the error correcting code and the encrypted first code block satisfy the certain mathematical relation described in S107. If yes, the encrypted first code block is determined to be a correct code block; vice versa. If the encrypted first code block is a correct code block, S207 may be performed; else, the second electronic device may wait for receiving a wav file from the first electronic device again. In some embodiments, if an acoustic signal received by the second electronic device does not contain the configuration information, the second electronic device may determine that the acoustic signal does not contain the configuration information based on the check in S205.

In S207, the second electronic device decrypting the encrypted first code block which is contained in the second code block to obtain the first code block.

In some embodiments, the second electronic device may employ the keyt which is used in the encryption process in S105 to decrypt the encrypted first code block.

In S209, the second electronic device decoding the first code block to obtain the configuration information.

In some embodiments, the first code block may be decoded according to ASCII table. After the decoding process, the second electronic device may obtain the configuration information, i.e., the AP ID and the password.

In S211, the second electronic device configuring itself as an AP based on the configuration information.

In some embodiments, the second electronic device may configure itself as a Wi-Fi AP based on the AP ID and the password.

In S113, the first electronic device searching an AP having the ID until the AP having the ID is detected.

In some embodiments, after playing the wav file, the first electronic device may start to search the AP having the ID.

In some embodiments, when the AP having the ID is detected, the first electronic device may stop playing the wav file.

In S115, after the AP having the ID is detected, the first electronic device generating a request for connecting to the AP to access internet service and sending the request to the second electronic device.

The process may be performed as a standard Wi-Fi pairing process. In the embodiment, a connection process with an authorization type of Wi-Fi Protected Access_Pre-Shared Key (WPA_PSK) is described. The first electronic device may generate a first set of information based on the configuration information, i.e., the AP ID and the password, and send the first set of information to the second electronic device. The first set of information may include Pre-Shared Key (PSK), a first random number and a Message Authentication Code (MAC). The second electronic device may generate a second random number and send it to the first electronic device. The first electronic device generates a first Message Integrity Check (MIC) based on the second random number and the first set of information, and sends the first MIC to the second electronic device.

In S213, the second electronic device receiving the request and sending a notice of permission to the first electronic device.

In some embodiments, the second electronic device may calculate a second MIC. And after receiving the first MIC from the first electronic device, the second electronic device may determine whether the first MIC is corresponding to the second MIC. If yes, the second electronic device may send the notice of permission to the first electronic device and connect with the first electronic device; vice versa.

In S117, the first electronic device receiving the notice of permission and connecting to internet through the AP.

In some embodiments, in the scenario that a plurality of mobile phones in which network service is provided exist in a vehicle and a vehicle-mounted computer is expected to access internet, the vehicle-mounted computer may broadcast an acoustic signal which carries configuration information for configuring Wi-Fi AP, where the configuration information includes an AP ID. One of the plurality of mobile phones may receive the acoustic signal first and configure a Wi-Fi AP based on the configuration information. And after broadcasting the acoustic signal, the vehicle-mounted computer may start to search a Wi-Fi AP having the ID. Once the Wi-Fi AP having the ID is detected, the vehicle-mounted computer generates and sends a request, to the Wi-Fi AP, for connecting to it to access internet service. Afterwards, Wi-Fi connection may be established between the vehicle-mounted computer and the Wi-Fi AP and the vehicle-mounted computer connects to internet through the Wi-Fi AP.

In some embodiments, in the scenario that a plurality of mobile devices in which network service is not provided are expected to access internet through a first mobile phone in which network service is provided, same configuration information may be set in the plurality of mobile devices. Therefore, after the first mobile phone configures itself as an AP based on the configuration information carried in an acoustic signal which is broadcasted by any of the plurality of mobile devices, all of the plurality of mobile devices can connect to the AP based on the configuration information and further connect to internet through the AP.

In an embodiment, a method for connecting a first electronic device to internet through a second electronic device is provided, where connection between the first and second electronic devices is BT connection. A first electronic device serializes configuration information for configuring AP, the configuration information including an AP ID and an ID of the first electronic device. Then, the first electronic device may perform encoding, encryption and modulation on the serialized configuration information in turn to form a wav file with a substantially inaudible frequency. Afterward, the first electronic device plays the wav file. A second electronic device, once receiving the wav file, may perform demodulation, decryption and decoding on the wav file to obtain the configuration information. Afterward, the second electronic device configures itself as a BT AP based on the AP ID contained in the configuration information. The first electronic device may search a BT AP having the AP ID. After the BT AP having the AP ID is detected, the first electronic device sends to the BT AP a request for connecting to the BT AP which request contains the ID of the first electronic device to access internet service. After receiving the request from the first electronic device, the BT AP may find that the ID of the first electronic device, which is contained in the configuration information, exists in the request and determine to send a notice of permission to the first electronic device. Finally, the first electronic device may receive the notice of permission from the BT AP and further connect to internet through the BT AP.

By employing the above methods, the second electronic device may configure itself as an AP without setting AP ID and a password manually, and the first electronic device may connect to the AP without searching the AP and inputting the password manually, which is more convenient for users. Further, the configuration information for configuring AP is broadcasted by the first electronic device through an acoustic signal having a substantially inaudible frequency, which avoids influence to persons. Further, no extra hardware is required in the two electronic devices.

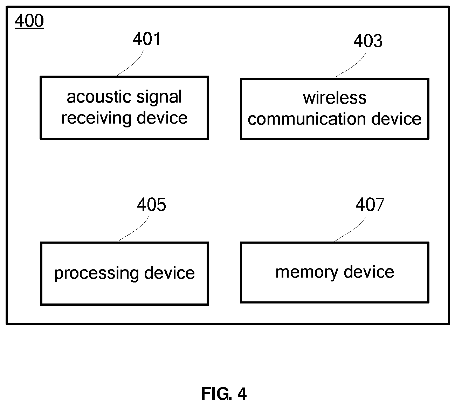

Referring to FIGs. 3 and 4, a first electronic device 300 may include a speaker system 301, a wireless communication device 303, a processing device 305 and a memory device 307. In some embodiments, the first electronic device 300 may be a vehicle-mounted computer. A second electronic device 400 may include an acoustic signal receiving device 401, a wireless communication device 403, a processing device 405 and a memory device 407. In some embodiments, the second electronic device 400 may be a mobile device, such as a mobile phone.

The processing device 305 may be configured to: obtain configuration information for configuring AP, where the configuration information includes an AP ID and a password; serialize the configuration information; encode the serialized configuration information to a first code block; encrypt the first code block; modulate the encrypted first code block to form a wav file with a substantially inaudible frequency; control the speaker system 301 to play the wav file, where the configuration information can be extracted from the wav file by the second electronic device 400 that receives the wav file and can be used to configure the second electronic device 400 as an AP; control the first electronic device 300 to search an AP having the AP ID; after the AP having the AP ID is detected, generate a request for connecting to the AP; control the wireless communication device 303 to send the request to the AP to access internet service; and control the wireless communication device 303 to connect to internet through the AP after a notice of permission is received from the AP by the wireless communication device 303.

In some embodiments, after the AP having the ID is detected, the processing device 305 may be further configured to: control the speaker system 301 to stop broadcasting the wav file.

In some embodiments, the processing device 305 may be a CPU, or a MCU, or a DSP etc., or any combination thereof. The memory device 307 may store an operating system and program instructions.

In some embodiments, the acoustic signal receiving device 401 may be a microphone.

The processing device 405 may be configured to: after the acoustic signal receiving device 401 receives the wav file from the first electronic device 300, sample the wav file; demodulate the sampled wav file to obtain the encrypted first code block; decrypt the encrypted first code block to obtain the first code block; decode the first code block to obtain the configuration information which includes the AP ID and the password; configure the second electronic device 400 as the AP using the AP ID and the password; after the request for connecting to the AP is received from the first electronic device 300 by the wireless communication device 403, determine whether to connect with the first electronic device 300; and control the wireless communication device 403 to send a notice of permission to the first electronic device 300.

In some embodiments, the processing device 405 may be a CPU, or a MCU, or a DSP etc., or any combination thereof. The memory device 407 may store an operating system and program instructions.

According to one embodiment, a non-transitory computer readable medium, which contains a computer program for connecting to internet through an electronic device, is provided. When the computer program is executed by a processor, it will instruct the processor to: broadcast an acoustic signal which carries configuration information for configuring AP, where the configuration information includes an AP ID, where the configuration information can be extracted from the acoustic signal by the electronic device that receives the acoustic signal and can be used to configure the electronic device as an AP; when an AP having the ID is detected, send to the AP a request for connecting to it to access internet service; and connect to internet through the AP after a notice of permission is received from the AP.

There is little distinction left between hardware and software implementations of aspects of systems; the use of hardware or software is generally a design choice representing cost vs. efficiency tradeoffs. For example, if an implementer determines that speed and accuracy are paramount, the implementer may opt for a mainly hardware and/or firmware vehicle; if flexibility is paramount, the implementer may opt for a mainly software implementation; or, yet again alternatively, the implementer may opt for some combination of hardware, software, and/or firmware.

## Claims

1. A method for connecting a first electronic device (300) to internet through a second electronic device (400), comprising:
the first electronic device broadcasting an acoustic signal which carries configuration information for configuring an access point for accessing internet, where the configuration information comprises an access point identifier, where the configuration information is adapted to be extracted from the acoustic signal by the second electronic device that receives the acoustic signal and is adapted to be used to configure the second electronic device itself as the access point for accessing internet;
searching by the first electronic device an access point for accessing internet having the identifier;
when the access point having the identifier is detected by the first electronic device: the first electronic device sending to the access point a request for connecting to it to access an internet service and the first electronic device connecting to internet through the access point after a notice of permission is received from the access point.

2. The method according to claim 1, wherein the configuration information further comprises a password, and/or comprises an identifier of the first electronic device.

3. The method according to claim 1 or 2, further comprising:
the first electronic device obtaining the configuration information for configuring the access point;
encoding the configuration information; and
modulating the encoded configuration information to form the acoustic signal.

4. The method according to one of the claims 1 to 3, wherein the acoustic signal is inaudible.

5. The method according to one of the preceding claims, further comprising:
the second electronic device receiving the acoustic signal;
the second electronic device extracting the configuration information from the received acoustic signal;
the second electronic device configuring itself as the access point using the extracted configuration information;
after configured as the access point, the second electronic device receiving a request for connecting to it to access the internet service from the first electronic device; and
the second electronic device sending a notice of permission to the first electronic device.

6. The method according to claim 5, wherein the second electronic device extracting the configuration information from the received acoustic signal comprises:
the second electronic device demodulating the received acoustic signal; and
decoding the demodulated acoustic signal to obtain the configuration information.

7. A first electronic device (300) comprising a speaker system, a wireless communication device and a first processing device configured to:
control the speaker system to broadcast an acoustic signal which carries configuration information for configuring an access point for accessing internet, where the configuration information comprises an access point identifier, where the configuration information is adapted to be extracted from the acoustic signal by a second electronic device (400) that receives the acoustic signal and is adapted to be used to configure the second electronic device itself as the access point for accessing internet;
control the first electronic device to search an access point for accessing internet having the identifier;
after the access point having the identifier is detected, generate a request for connecting to the access point;
control the wireless communication device to send the request to the access point to access an internet service; and
control the wireless communication device to connect to internet through the access point after a notice of permission is received from the access point by the wireless communication device.

8. The first electronic device according to claim 7, wherein the configuration information further comprises a password and/or comprises an identifier of the first electronic device.

9. The first electronic device according to claim 7 or 8, wherein the first processing device is further configured to:
obtain the configuration information for configuring the access point;
encode the configuration information; and
modulate the encoded configuration information to form the acoustic signal.

10. The first electronic device according to one of the claims 7 to 9, wherein the acoustic signal is inaudible.

11. System, comprising the first electronic device (300) according to one of the claims 7 to 10 and the second electronic device (400), the second electronic device comprising an acoustic signal receiving device, a wireless communication device and a second processing device, configured to:
after the acoustic signal is received by the acoustic signal receiving device, extract the configuration information from the received acoustic signal;
configure the second electronic device itself as the access point for accessing internet based on the configuration information; and
after a request for connecting to the access point is received from the first electronic device by the wireless communication device, control the wireless communication device to send a notice of permission to the first electronic device.

12. System according to claim 11, wherein the second processing device of the second electronic device is further configured to:
demodulate the received acoustic signal; and
decode the demodulated acoustic signal to obtain the configuration information.

## Patentansprüche

1. Verfahren zum Verbinden einer ersten elektronischen Vorrichtung (300) mit dem Internet über eine zweite elektronische Vorrichtung (400), umfassend:
dass die erste elektronische Vorrichtung ein akustisches Signal überträgt, das Konfigurationsinformationen zum Konfigurieren eines Zugriffspunktes zum Zugreifen auf das Internet trägt, wobei die Konfigurationsinformationen eine Zugriffspunktkennung umfassen, wobei die Konfigurationsinformationen angepasst sind, um durch die zweite elektronische Vorrichtung, die das elektronische Signal empfängt, aus dem akustischen Signal extrahiert zu werden, und angepasst sind, um verwendet zu werden, um die zweite elektronische Vorrichtung selbst als den Zugriffspunkt zum Zugreifen auf das Internet zu konfigurieren;
Suchen eines Zugriffspunktes zum Zugreifen auf das Internet, der die Kennung aufweist, durch die erste elektronische Vorrichtung;
wenn der Zugriffspunkt, der die Kennung aufweist, durch die erste elektronische Vorrichtung erfasst wird:
dass die erste elektronische Vorrichtung eine Anforderung zum Verbinden damit an den Zugriffspunkt sendet, um auf einen Internetdienst zuzugreifen, und sich die erste elektronische Vorrichtung über den Zugriffspunkt mit dem Internet verbindet, nachdem eine Genehmigungsmitteilung von dem Zugriffspunkt empfangen wurde.

2. Verfahren nach Anspruch 1, wobei die Konfigurationsinformationen ferner ein Passwort umfassen und/oder eine Kennung der ersten elektronischen Vorrichtung umfassen.

3. Verfahren nach Anspruch 1 oder 2, ferner umfassend:
dass die erste elektronische Vorrichtung die Konfigurationsinformationen zum Konfigurieren des Zugriffspunktes erhält;
Kodieren der Konfigurationsinformationen; und
Modulieren der kodierten Konfigurationsinformationen, um das akustische Signal zu bilden.

4. Verfahren nach einem der Ansprüche 1 bis 3, wobei das akustische Signal nicht hörbar ist.

5. Verfahren nach einem der vorangehenden Ansprüche, ferner umfassend:
dass die zweite elektronische Vorrichtung das akustische Signal empfängt;
dass die zweite elektronische Vorrichtung die Konfigurationsinformationen aus dem empfangen akustischen Signal extrahiert;
dass die zweite elektronische Vorrichtung unter Verwendung der extrahierten Konfigurationsinformationen sich selbst als den Zugriffspunkt konfiguriert;
dass die zweite elektronische Vorrichtung, nachdem diese als der Zugriffspunkt konfiguriert wurde, eine Anforderung zum Verbinden damit, um auf den Internetdienst zuzugreifen, von der ersten elektronischen Vorrichtung empfängt; und
dass die zweite elektronische Vorrichtung eine Genehmigungsmitteilung an die erste elektronische Vorrichtung sendet.

6. Verfahren nach Anspruch 5, wobei das Extrahieren der Konfigurationsinformationen aus dem empfangen akustischen Signal durch die zweite elektronische Vorrichtung Folgendes umfasst:
dass die zweite elektronische Vorrichtung das empfangene akustische Signal demoduliert; und
Dekodieren des demodulierten akustischen Signals, um die Konfigurationsinformationen zu erhalten.

7. Erste elektronische Vorrichtung (300), umfassend ein Lautsprechersystem, eine drahtlose Kommunikationsvorrichtung und eine erste Verarbeitungsvorrichtung, die zu Folgendem konfiguriert ist:
Steuern des Lautsprechersystems, um ein akustisches Signal zu übertragen, das Konfigurationsinformationen zum Konfigurieren eines Zugriffspunktes zum Zugreifen auf das Internet trägt, wobei die Konfigurationsinformationen eine Zugriffspunktkennung umfassen, wobei die Konfigurationsinformationen angepasst sind, um durch eine zweite elektronische Vorrichtung (400), die das akustische Signal empfängt, aus dem akustischen Signal extrahiert zu werden, und angepasst sind, um verwendet zu werden, um die zweite elektronische Vorrichtung selbst als den Zugriffspunkt zum Zugreifen auf das Internet zu konfigurieren;
Steuern der ersten elektronischen Vorrichtung, um einen Zugriffspunkt zum Zugreifen auf das Internet zu suchen, der die Kennung aufweist;
Generieren einer Anforderung zum Verbinden mit dem Zugriffspunkt, nachdem der Zugriffspunkt erfasst wurde, der die Kennung aufweist;
Steuern der drahtlosen Kommunikationsvorrichtung, um die Anforderung zu dem Zugriffspunkt zu senden, um auf einen Internetdienst zuzugreifen; und
Steuern der drahtlosen Kommunikationsvorrichtung, um sich über den Zugriffspunkt mit dem Internet zu verbinden, nachdem eine Genehmigungsmittelung von dem Zugriffspunkt durch die drahtlose Kommunikationsvorrichtung empfangen wurde.

8. Erste elektronische Vorrichtung nach Anspruch 7, wobei die Konfigurationsinformationen ferner ein Passwort umfassen und/oder eine Kennung der ersten elektronischen Vorrichtung umfassen.

9. Erste elektronische Vorrichtung nach Anspruch 7 oder 8, wobei die erste Verarbeitungsvorrichtung ferner zu Folgendem konfiguriert ist:
Erhalten der Konfigurationsinformationen zum Konfigurieren des Zugriffspunktes;
Kodieren der Konfigurationsinformationen; und
Modulieren der kodierten Konfigurationsinformationen, um das akustische Signal zu bilden.

10. Erste elektronische Vorrichtung nach einem der Ansprüche 7 bis 9, wobei das akustische Signal nicht hörbar ist.

11. System, umfassend die erste elektronische Vorrichtung (300) nach einem der Ansprüche 7 bis 10 und die zweite elektronische Vorrichtung (400), wobei die zweite elektronische Vorrichtung eine Vorrichtung zum Empfangen von akustischen Signalen, eine drahtlose Kommunikationsvorrichtung und eine zweite Verarbeitungsvorrichtung umfasst, die zu Folgendem konfiguriert ist:
Extrahieren der Konfigurationsinformationen aus dem empfangenen akustischen Signal, nachdem das akustische Signal durch die Vorrichtung zum Empfangen von akustischen Signalen empfangen wurde;
Konfigurieren der zweiten elektronischen Vorrichtung selbst als den Zugriffspunkt zum Zugreifen auf das Internet auf Grundlage der Konfigurationsinformationen; und
Steuern der drahtlosen Kommunikationsvorrichtung, um eine Genehmigungsmitteilung an die erst elektronische Vorrichtung zu senden, nachdem eine Anforderung zum Verbinden mit dem Zugriffspunkt von der ersten elektronischen Vorrichtung durch die drahtlose Kommunikationsvorrichtung empfangen wurde.

12. System nach Anspruch 11, wobei die zweite Verarbeitungsvorrichtung der zweiten elektronischen Vorrichtung ferner zu Folgendem konfiguriert ist:
Demodulieren des empfangenen akustischen Signals; und
Dekodieren des demodulierten akustischen Signals, um die Konfigurationsinformationen zu erhalten.

## Revendications

1. Procédé pour connecter un premier dispositif électronique (300) à Internet par l'intermédiaire d'un second dispositif électronique (400), comprenant :
le premier dispositif électronique diffusant un signal acoustique qui transporte des informations de configuration pour configurer un point d'accès afin d'accéder à Internet, où les informations de configuration comprennent un identifiant de point d'accès, où les informations de configuration sont conçues pour être extraites du signal acoustique par le second dispositif électronique qui reçoit le signal acoustique et sont conçues pour être utilisées pour configurer le second dispositif électronique lui-même en tant que point d'accès afin d'accéder à Internet ;
la recherche par le premier dispositif électronique d'un point d'accès pour accéder à Internet ayant l'identifiant ;
lorsque le point d'accès ayant l'identifiant est détecté par le premier dispositif électronique :
le premier dispositif électronique envoyant au point d'accès une demande de connexion à celui-ci pour accéder à un service Internet et le premier dispositif électronique se connectant à Internet par l'intermédiaire du point d'accès après qu'une notification d'autorisation est reçue du point d'accès.

2. Procédé selon la revendication 1, dans lequel les informations de configuration comprennent en outre un mot de passe et/ou comprennent un identifiant du premier dispositif électronique.

3. Procédé selon la revendication 1 ou 2, comprenant en outre :
le premier dispositif électronique obtenant les informations de configuration pour configurer le point d'accès ;
le codage des informations de configuration ; et
la modulation des informations de configuration codées pour former le signal acoustique.

4. Procédé selon l'une des revendications 1 à 3, dans lequel le signal acoustique est inaudible.

5. Procédé selon l'une des revendications précédentes, comprenant en outre :
le second dispositif électronique recevant le signal acoustique ;
le second dispositif électronique extrayant les informations de configuration du signal acoustique reçu ;
le second dispositif électronique se configurant lui-même comme point d'accès à l'aide des informations de configuration extraites ;
après avoir été configuré comme point d'accès, le second dispositif électronique recevant une demande de connexion à celui-ci pour accéder au service Internet à partir du premier dispositif électronique ; et
le second dispositif électronique envoyant une notification d'autorisation au premier dispositif électronique.

6. Procédé selon la revendication 5, dans lequel le second dispositif électronique extrayant les informations de configuration du signal acoustique reçu comprend :
le second dispositif électronique démodulant le signal acoustique reçu ; et
le décodage du signal acoustique démodulé pour obtenir les informations de configuration.

7. Premier dispositif électronique (300), comprenant un système de haut-parleur, un dispositif de communication sans fil et un premier dispositif de traitement configurés pour :
commander le système de haut-parleur pour diffuser un signal acoustique qui transporte des informations de configuration pour configurer un point d'accès afin d'accéder à Internet, où les informations de configuration comprennent un identifiant de point d'accès, où les informations de configuration sont conçues pour être extraites du signal acoustique par un second dispositif électronique (400) qui reçoit le signal acoustique et sont conçues pour être utilisées afin de configurer le second dispositif électronique lui-même comme point d'accès pour accéder à Internet ;
la commande du premier dispositif électronique pour rechercher un point d'accès afin d'accéder à Internet ayant l'identifiant ;
après la détection du point d'accès ayant l'identifiant, la génération d'une demande de connexion au point d'accès ;
la commande du dispositif de communication sans fil pour envoyer la demande au point d'accès afin d'accéder à un service Internet ; et
la commande du dispositif de communication sans fil pour se connecter à Internet par l'intermédiaire du point d'accès après qu'une notification d'autorisation est reçue du point d'accès par le dispositif de communication sans fil.

8. Premier dispositif électronique selon la revendication 7, dans lequel les informations de configuration comprennent en outre un mot de passe et/ou comprennent un identifiant du premier dispositif électronique.

9. Premier dispositif électronique selon la revendication 7 ou 8, dans lequel le premier dispositif de traitement est en outre configuré pour :
obtenir les informations de configuration pour configurer le point d'accès ;
coder les informations de configuration ; et
moduler les informations de configuration codées pour former le signal acoustique.

10. Premier dispositif électronique selon l'une des revendications 7 à 9, dans lequel le signal acoustique est inaudible.

11. Système comprenant le premier dispositif électronique (300) selon l'une des revendications 7 à 10 et le second dispositif électronique (400), le second dispositif électronique comprenant un dispositif de réception de signal acoustique, un dispositif de communication sans fil et un second dispositif de traitement, configurés pour :
après réception du signal acoustique par le dispositif de réception de signal acoustique, extraire les informations de configuration du signal acoustique reçu ;
configurer le second dispositif électronique lui-même comme point d'accès pour accéder à Internet sur la base des informations de configuration ; et
après qu'une demande de connexion au point d'accès a été reçue du premier dispositif électronique par le dispositif de communication sans fil, commander le dispositif de communication sans fil pour envoyer une notification d'autorisation au premier dispositif électronique.

12. Système selon la revendication 11, dans lequel le second dispositif de traitement du second dispositif électronique est en outre configuré pour :
démoduler le signal acoustique reçu ; et
décoder le signal acoustique démodulé pour obtenir les informations de configuration.
